# EUROPEAN PATENT APPLICATION

(11) **EP 4 772 269 A1**
(43) Date of publication of application: **08.07.2026**
(21) Application number: 23950672.8
(22) Date of filing: 29.08.2023
(51) Int. Cl.: B01J 20/28, B01D 53/06

(54) **GAS RECOVERY DEVICE**

(71) Applicant: MITSUBISHI ELECTRIC CORPORATION, Chiyoda-ku Tokyo 100-8310 (JP)
(72) Inventor: TANISHIMA, Makoto, Tokyo 100-8310 (JP); INOUE, Takumi, Tokyo 100-8310 (JP); FUKUI, Tomoya, Tokyo 100-8310 (JP); FUJINO, Jun, Tokyo 100-8310 (JP); ONAKA, Yoji, Tokyo 100-8310 (JP); SHINOKI, Toshio, Tokyo 100-8310 (JP); KAWAMOTO, Makoto, Tokyo 100-8310 (JP)
(74) Representative: Meissner Bolte Partnerschaft mbB
(86) International application number: PCT/JP2023/031093
(87) International publication number: WO 2025/046721

(57) **Abstract**

A gas recovery device according to the present invention includes a protective member, an adsorbing member provided on an inside of the protective member, and includes an adsorbent that adsorb a target gas, and an adsorber, which includes an adsorbing space formed on an inside of the adsorber, and through which a combined gas that includes the target gas flows. An incline which inclines towards a horizontal direction is provided in the adsorber. In the adsorber, the protective member moves on the incline.

## Description

### Technical Field

The present invention relates to a gas recovery device.

### Background Art

Patent Document 1 discloses a device that removes carbon dioxide from the atmosphere using an adsorbent which is able to adsorb carbon dioxide.

### Citation List

### Patent Documents

Patent Document 1: Japanese Unexamined Patent Application, First Publication No. JP 2019 - 84 469 A.

### Summary of Invention

### Problem to be Solved by the Invention

Since concentration of CO2 in air is low, increase in recovery efficiency of an adsorbent used in CO2 recovery is required. On the other hand, since adsorbents are prone to damaging easily, adsorbent damage prevention is also required.

The present invention has been made with the aforementioned problem in mind, and an object thereof is to provide a gas recovery device that prevents adsorbent damage, while increasing gas recovery efficiency of a target gas.

### Means to Solve the Problem

An embodiment of a gas recovery device according to the present invention includes a protective member, an adsorbing member provided on an inside of the protective member, and includes an adsorbent that adsorb a target gas, and an adsorber, which includes an adsorbing space formed on an inside of the adsorber, and through which a combined gas that includes the target gas flows. An incline which inclines towards a horizontal direction is provided in the adsorber. In the adsorber, the protective member moves on the incline.

### Effects of the Invention

According to the present invention, it is possible to provide a gas recovery device that prevents adsorbent damage, while increasing gas recovery efficiency of a target gas.

### Brief Description of Drawings

- FIG. 1: A block diagram of a gas recovery device according to a first embodiment.
- FIG. 2: A front view of an adsorbing member according to the first embodiment.
- FIG. 3: An inclined view of the adsorbing member according to the first embodiment.
- FIG. 4: A schematic view of the gas recovery device according to the first embodiment.
- FIG. 5: A schematic cross-section along the line A-A of FIG. 4, showing the gas recovery device according to the first embodiment.
- FIG. 6: A schematic cross-section of the gas recovery device according to the first embodiment.
- FIG. 7: A schematic cross-section of the gas recovery device according to the first embodiment.
- FIG. 8: A perspective view of an adsorbing member according to a second embodiment.
- FIG. 9: An exploded perspective view of the adsorbing member according to the second embodiment.
- FIG. 10: A cross-sectional view of an inclined plate according to a third embodiment.
- FIG. 11: A perspective view of an adsorbing member according to a fourth embodiment.
- FIG. 12: A cross-sectional view of an inclined plate according to a fourth embodiment.

### Description of Embodiments

Hereinafter, embodiments of the present invention are explained with reference to the drawings. The scope of the present invention is not limited to the embodiments below, and embodiments may be changed so long as the embodiments do not depart from the technical scope of the present invention.

### First Embodiment

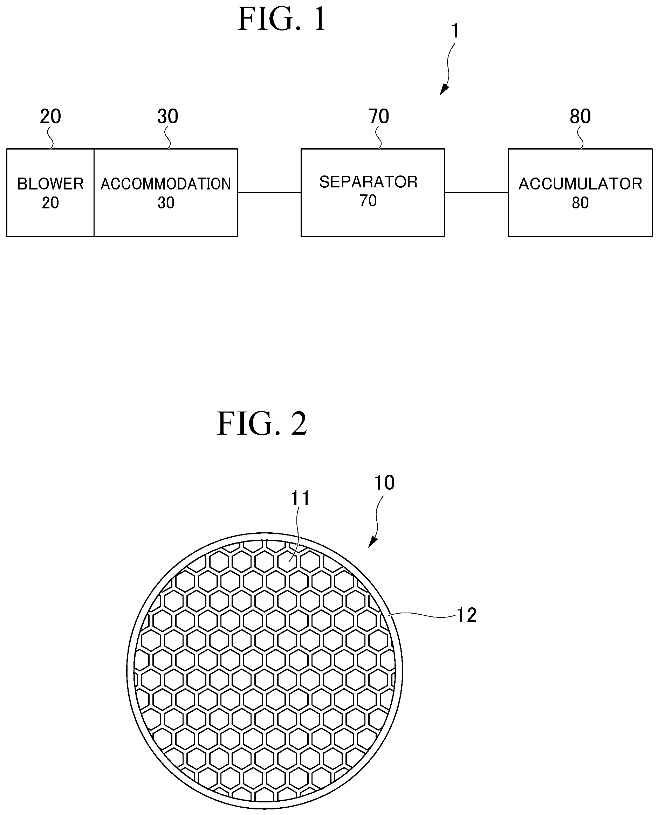

FIG. 1 A block diagram of a gas recovery device 1 according to the first embodiment. The gas recovery device 1 recovers carbon dioxide (target gas) from the atmosphere (mixed gas which contains target gas). The gas recovery device 1 for example, is installed on a roof of a building (an office building or an apartment building). A location at which the gas recovery device 1 is installed is not limited. The gas recovery device 1 may also be installed on an open space on the side of a building, on an inner yard of an apartment building, or at a desert or the like. The gas recovery device 1 may also be installed indoors.

The gas recovery device 1 includes an adsorbing member 10, a blower 20, and an accommodator 30, a separator 70, and an accumulator 80. The adsorbing member 10 is accommodated inside of the accommodator 30.

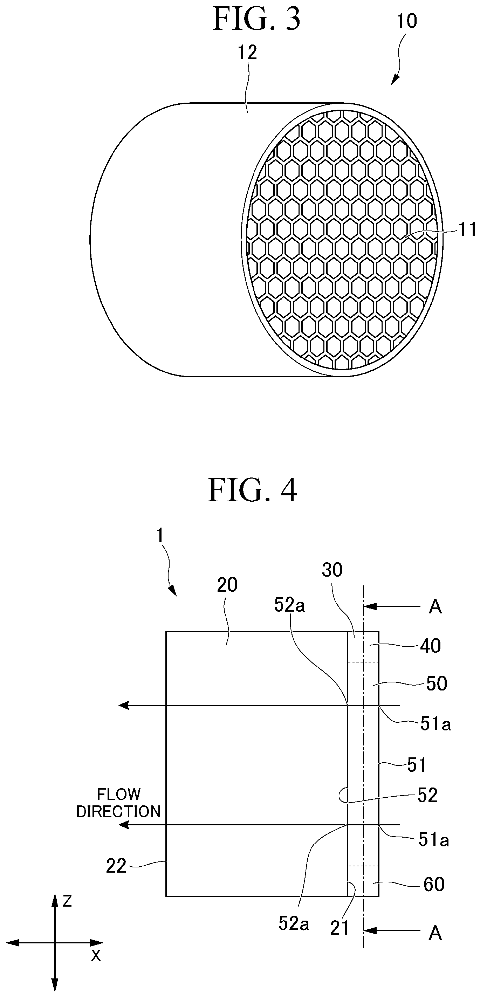

As shown in FIG. 2 and FIG. 3, the adsorbing member 10 includes an adsorbent 11 and a protective member 12.

The adsorbent 11 includes a material that adsorbs carbon dioxide. As a material that adsorbs carbon dioxide for example, amines, zeolite, silica gel, diatomaceous earth, alumina, and activated carbon or the like may be mentioned. A plurality of the aforementioned materials may be adopted. Materials other than the materials above may also be adopted. The adsorbent 11 is a porous material. The adsorbent 11 has a cylindrical shape. The adsorbent 11 is a honeycomb material.

The protective member 12 has a cylindrical tube shape. The protective member 12 covers the outer circumferential surface of the adsorbent 11. The protective member 12 is configured as a cylinder that opens to both ends. In the explanations below, a direction along a center axis of the protective member 12 is referred to as an axial direction of the protective member 12. The protective member 12 is breathable, by including openings on both ends in the axial direction thereof.

The protective member 12 may also be breathable by including openings on an outer circumferential surface thereof. In such case, the protective member 12 may be a mesh shape. In other words, to insure breathability, the protective member 12 does not cover an entire surface of the adsorbent 11, and a part of the protective member 12 is configured so to be open. For example, the protective member 12 may be a metal such as aluminum, stainless steel, or copper, or a resin such as polyvinyl chloride or the like.

The adsorbing member 10 for example, is formed by coating the adsorbent 11 with protective member 12, then peeling off said coating from both ends so as to form the openings. The adsorbing member 10 may also be formed by wrapping the protective member 12 around the outer circumferential surface of the adsorbent 11. The adsorbing member 10 may also be formed by forming a cylindrical tube shape protective member 12, and inserting the adsorbent 11 to an inside of the protective member 12. At such a time, there are cases where the adsorbent 11 does not completely end up being cylindrical in shape (an elliptical shape for instance), and some gaps form between an inner circumferential surface of the protective member 12 and the outer circumferential surface of the adsorbent 11.

In the above case, the gaps between the inner circumferential surface of the protective member 12 and an outer circumferential diameter of the adsorbent 11 are filled up using soft material not shown on the drawings so as to prevent air from flowing between the adsorbent 11 and the protective member 12. Accordingly, since air is suppressed from flowing between the inner circumferential surface of the protective member 12 and the outer circumferential surface of the adsorbent 11, it is possible to suppress having adsorbing efficiency of carbon dioxide by the adsorbent 11 decrease. An example of said soft material is a sponge or seal tape or the like.

The blower 20 includes a fan not shown on the drawings which creates an air flow. As shown in FIG. 4, the blower 20 includes an air intake port 21 which takes in air through from the outside, and an air discharge port 22 which discharges air to the outside. The blower 20 for example may be a blower of an outdoor or indoor unit of an air conditioner, or a ventilation fan.

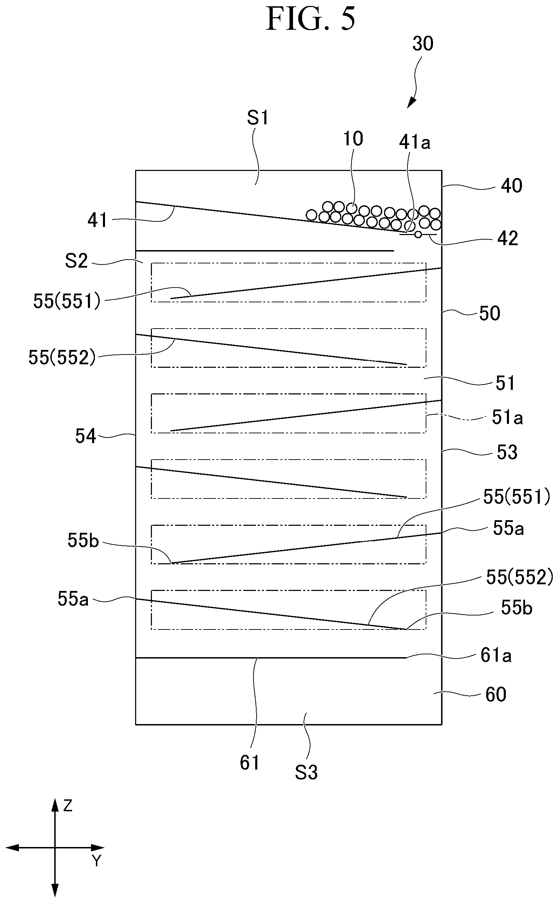

The accommodator 30 and the blower 20 are disposed so as to face one another. As shown in FIG. 4 and FIG. 5, the accommodator 30 includes a storage 40, an adsorber 50, and a recovery part 60. The accommodator 30 accommodates a plurality of adsorbing members 10.
In the explanations hereinafter, a vertical direction is referred to as a "Z direction".
A direction that is orthogonal to the Z direction is an "X direction", and another direction that is orthogonal to both the X direction and the Z direction is referred to as a "Y direction". The accommodator 30 and the blower 20 face the X direction.

The storage 40 is a boX shape that includes a storage space S1 which stores the adsorbing member 10 on an inside thereof. The storage 40 is disposed above the adsorber 50. The storage 40 includes an inclined bottom plate 41 which configures a bottom of the boX shape thereof. An opening 41a is provided in the inclined bottom plate 41. The inclined bottom plate 41 gradually inclines to the bottom as the inclined bottom plate 41 faces the opening 41a.

The opening 41a connects the storage space S1 and an adsorbing space S2 of the adsorber 50 to be mentioned later on. The storage 40 includes a valve 42 that opens and closes the opening 41a. When the valve 42 closes the opening 41a, the adsorbing member 10 is stored in the storage 40. When the valve 42 opens the opening 41a, the adsorbing member 10 falls towards the adsorbing space S2 of the adsorber 50 due to the weight of the adsorbing member 10.

The adsorber 50 is disposed between the storage 40 and the recovering part 60. The adsorbing space S2 is formed on an inside of the adsorber 50. Air flows through the adsorbing space S2 of the adsorber 50. The adsorber 50 is disposed so as to face the air intake port 21 of the blower 20. The adsorber 50 may be disposed so as to face the air discharge port 22 of the blower 20. The blower 20 uses the generated air flow to guide air into the adsorbing space S2. Within the adsorbing space S2, the adsorbent 11 of the adsorbing member 10 contacts the air, and adsorbs carbon dioxide included in the air.

The adsorber 50 includes a front wall 51, a rear wall 52 opposite to the front wall 51, a side wall 53, and a side wall 54 opposite to the side wall 53. The front wall 51 and the rear wall 52 oppose the X direction. The side walls 53 and 54 oppose the Y direction. The rear wall 52 opposes the air intake port 21 and the X direction. The side walls 53 and 54 are connected to each of the front wall 51 and the rear wall 52. The front wall 51, the rear wall 52, and the side walls 53 and 54 specify the adsorbing space S2.

As shown in FIG. 4, a flow intake port 51a is provided on the front wall 51. Air passes through the flow intake port 51a and flows into the adsorbing space S2. In the present embodiment, although a plurality of flow intake ports 51a are provided on the front wall 51, having at least only one flow intake port 51a provided on the front wall 51 is possible.

A flow discharge port 52a is provided on the rear wall 52. Air passes through the flow discharge port 52a and is discharged out of the adsorbing space S2. In the present embodiment, although a plurality of the flow discharge ports 52a are provided on the rear wall 52, having at least only one flow discharge port 52a provided on the rear wall 52 is possible. The flow discharge port 52a opposes the flow intake port 51a in the X direction. Air that passes through an inside of the adsorbing space S2 flows from the intake port 51a towards the flow discharge port 52a in the X direction.

The gas recovery device 1 includes a plurality of inclined plates 55 (inclines). The gas recovery device 1 may only include one inclined plate 55. The inclined plates 55 are disposed within the adsorbing space S2. The inclined plates 55 incline towards an X plane (XY plane). Specifically, the inclined plates 55 are disposed so that long hand directions thereof incline towards the X plane. In the explanations below, a direction which is orthogonal to the long hand direction along a plate surface of the inclined plate 55 is referred to as a "width direction" of the inclined plate 55. The inclined plate 55 is disposed so that the width direction thereof is parallel with the X direction. Furthermore, shapes of the inclined plate 55 are not restricted to the shapes shown on the drawings, so long as the inclined plates 55 incline with respect to the X plane.

A first end 55a of the inclined plate 55 in the long hand direction is fixed to the adsorber 50. A second end 55b of the inclined plate 55 in the long hand direction is separated from the adsorber 50, and a gap is formed between the second end 55b and the adsorber 50. The first end 55a is more above than the second end 55b. A distance between the first end 55a and the storage 40 is smaller than a distance between the second end 55b and the storage 40.

The inclined plate 55 includes a first inclined plate 551 and a second inclined plate 552. The first inclined plate 551 and the second inclined plate 552 are alternately provided in the Z direction. In the first inclined plate 551, the first end 55a is fixed to the side wall 53, the second end 55b is separated from the side wall 54, and a gap is formed between the second end 55b and the side wall 54. In the second inclined plate 552, the first end 55a is fixed to the side wall 54, the second end 55b is separated from the side wall 53, and a gap is formed between the second end 55b and the side wall 53.

Due to the weight of the adsorbing member 10, the adsorbing member 10 moves by rolling or sliding on the inclined plate 55. Accordingly, the adsorbing members 10 move to the bottom towards the adsorbing space S2 by moving from the storage 40 to the recovery part 60. The adsorbing member 10 is disposed on top of the inclined plate 55 so that an axial direction of the protective member 12 is roughly parallel to a width direction (X direction) of the inclined plate 55.

In other words, the axial direction of the protective member 12 is roughly parallel to a flow direction of air at the adsorbing space S2. Air is guided to the adsorbing space S2 through the flow intake port 51a. The adsorbent 11 of the adsorbing member 10 contacts air in the adsorbing space S2, and adsorbs the carbon dioxide included in the air. The carbon dioxide removed by the adsorbent 11 is discharged out of the adsorbing space S2 through the flow discharge port 52a.

The recovery part 60 recovers the adsorbing members 10 (adsorbents 11) that have adsorbed carbon dioxide. The recovery part 60 is disposed below the adsorber 50. The recovery part 60, on an inside thereof, includes a recovery space S3 in which the adsorbing members 10 (adsorbents 11) are accommodated. The recovery part 60 includes an upper plate 61 which configures a top of the boX shape. An opening 61a is provided on the upper plate 61. The opening 61a connects the adsorbing space S2 and the recovery space S3. It is possible to attach and remove the recovery part 60 with respect to the adsorber 50.

The separator 70 is connected to the recovery part 60. The adsorbing members 10 are transported from the recovery part 60 to the separator 70. The separator 70 applies heat or pressure to the adsorbing members 10 (adsorbents 11) that are transported from the recovery part 60, and separates carbon dioxide from the adsorbents 11. The separator 70 may for example, include a heating device not shown on the drawings, which supplies heated air to an inside of the separator 70. It is possible to separate carbon dioxide that has attached to the adsorbent 11 from the adsorbent 11 by heating the adsorbents 11 using said heated air.

The accumulator 80 is connected to the separator 70 via a pipe not shown on the drawings. The accumulator 80 for example, may be a cylinder in which carbon dioxide is storable. The carbon dioxide separated from the adsorbent 11 using the separator 70 is discharged from the separator 70 and accumulates in the accumulator 80 via the pipe.

Referring to FIG. 4 to FIG. 7, operation and gas recovery of the gas recovery device 1 according to the present embodiment are explained. In FIG. 5 to FIG. 7, the higher the carbon dioxide concentration is in the adsorbent 11, the darker the color is of the adsorbent 11. A method of gas recovery includes an absorption step, a separation step, and a recovery step.

As shown in FIG. 5, prior to the absorption step, the opening 41a is closed using the valve 42. The adsorbing members 10 are stored in the storage 40.

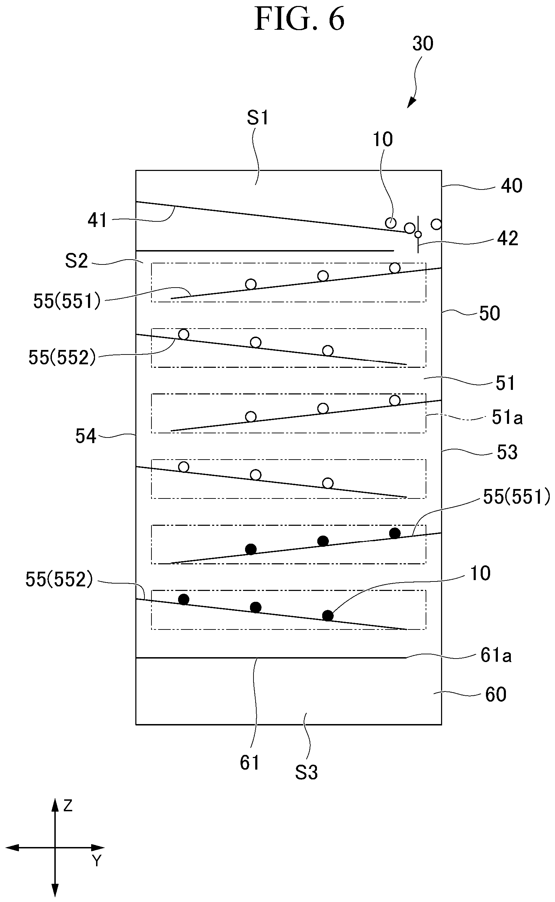

As shown in FIG. 6, when the opening 41a is opened by the valve 42, the adsorbing member 10 descends to the bottom towards the adsorbing space S2 due to the weight of the adsorbing member 10, and moves by rolling or sliding on the inclined plate 55. Air passes through the flow intake port 51a and is guided into the adsorbing space S2. The adsorbent 11 of the adsorbing member 10 in the adsorbing space S2 comes into contact with the air, and adsorbs the carbon dioxide included in the air (absorption step).

At such a time, since the axial direction of the protective member 12 is roughly parallel to the flow direction of air in the adsorbing space S2, it is possible to cause the air to efficiently come into contact with the adsorbents 11 by having the air flow through openings on both ends of the protective member 12. Air having carbon dioxide removed using the adsorbing members 10 flows out from the adsorbing space S2, through the flow discharge port 52a.

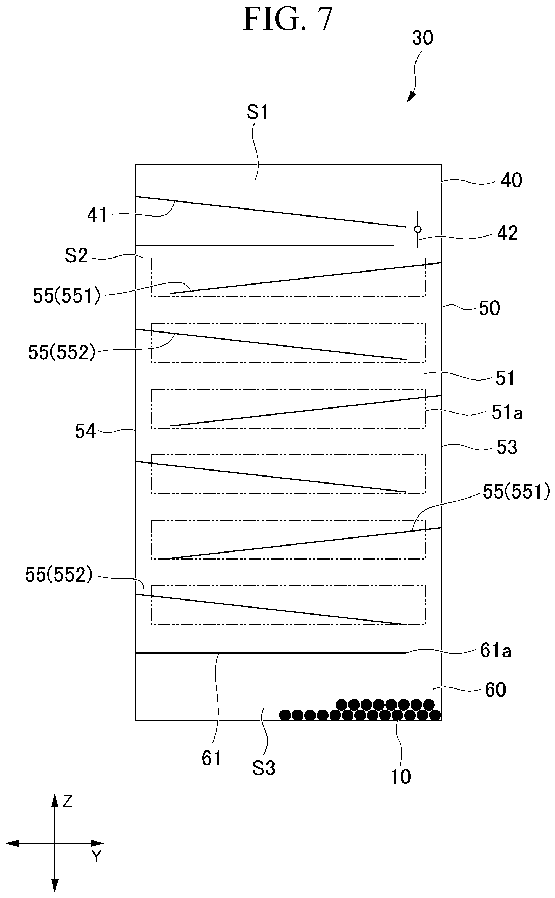

As shown in FIG. 7, the adsorbing members 10 (adsorbents 11) which have adsorbed carbon dioxide pass through the opening 61a, and are accommodated in the recovery space S3 of the recovery part 60. The adsorbing member 10 that is accommodated in the recovery space S3 is transported to the separator 70. Carbon dioxide is separated from the adsorbents 11 at the separator 70 (separation step). Carbon dioxide that is separated from the adsorbents 11 is discharged from the separator 70 and is stored in the accumulator 80 (recovery step).

As explained above, the gas recovery device 1 according to the present embodiment includes the protective member 12, the adsorbing member 10 which includes the adsorbent 11 that adsorbs the target gas, and is provided on the inside of the protective member 12, and the adsorber 50 which is formed inside the adsorbing space S2 through which combined gas including the target gas flows through. The inclined plate 55 is provided in the adsorber 50 so as to incline towards the horizontal direction. In the adsorber 50, the protective member 12 moves on the inclined plate 55.

In the adsorber 50, the adsorbents 11 of the adsorbing members 10 come into contact with the combined gas which contains the target gas, and adsorbs the target gas included in the combined gas. The adsorbent 11 is provided inside the protective member 12, and by having the protective member 12 move on the inclined plate 55, it is possible to transport the adsorbing member 10 (adsorbent 11) in the adsorber 50.

Therefore, there is no effort needed to transport the adsorbing members 10 (adsorbents 11) in the adsorber 50, and it is possible to reduce recovery costs. Since the adsorbing members 10 moves on the inclined plate 55, compared to a case where the adsorbing member 10 simply free falls, exposure time of the adsorbents 11 to the combined gas increases. Therefore, it is possible to have the adsorbents 11 efficiently adsorb the target gas. As a result, efficiency of recovery effect of the target gas increases.

The adsorbent 11 is provided on the inside of the protective member 12, and since the protective member 12 moves on the inclined plate 55, the adsorbent 11 is prevented from coming into contact with the inclined plate 55, suppressing wear of the adsorbent 11. It is possible to prevent damage of the adsorbents 11 due to contact with the inclined plates 55 and/or other construction components.

From the above, it is possible to prevent damage to the adsorbent 11, and increase in recovery efficiency of the target gas is possible.

The protective member 12 also includes breathability.

Accordingly, it is possible to efficiently have the combined gas which contains the target gas pass through the adsorbent 11 disposed on the inside of the protective member 12, and it is possible to increase absorption efficiency of the target gas by the adsorbent 11.

The adsorbent 11 has a cylindrical shape. The protective member 12 also has a cylindrical tube shape, and covers the outer circumferential surface of the adsorbent 11.

Since the protective member 12 possess a cylindrical tube shape, it is possible to cause the protective member 12 to move by rolling on the inclined plate 55, and it is possible to efficiently transport the adsorbing member 10 (adsorbent 11) in the adsorber 50.

There are cases where manufacturing errors which easily occur to the adsorbent 11, cause a cross-section thereof not be perfectly round. By providing the cylindrical tube shape protective member 12 in which manufacturing errors are relatively less likely to occur on the outside of the adsorbent 11, it is possible to increase roundness of the adsorbing member 10. As a result, it is easy to cause the protective member 12 to roll and move down the inclined plate 55.

The protective member 12 has a cylindrical tube shape that opens to both ends. A center axis of the protective member 12 and a flow direction of the combined gas in the adsorber 50 are roughly parallel to one another.

Accordingly, by having the combined gas flow through the openings on both ends of the protective member 12, it is possible to cause the adsorbent 11 on the inside of the protective member 12 to efficiently come into contact therewith, and it is possible to increase absorption efficiency of the target gas by the adsorbent 11.

A second valve that opens and closes the opening 61a may be provided in the opening 61a which connects the adsorbing space S2 and the recovery space S3. The second valve may remain closed until the adsorbent 11 has finished the absorption reaction, and opens the second valve after the reaction has finished, making it possible to further increase absorption efficiency of the target gas by the adsorbent 11.

### Second Embodiment

Next, the gas recovery device 1 according to a second embodiment is explained. The gas recovery device 1 according to the present embodiment is fundamentally the same as the gas recovery device of the first embodiment, with explanations hereafter only centering on differences therebetween.

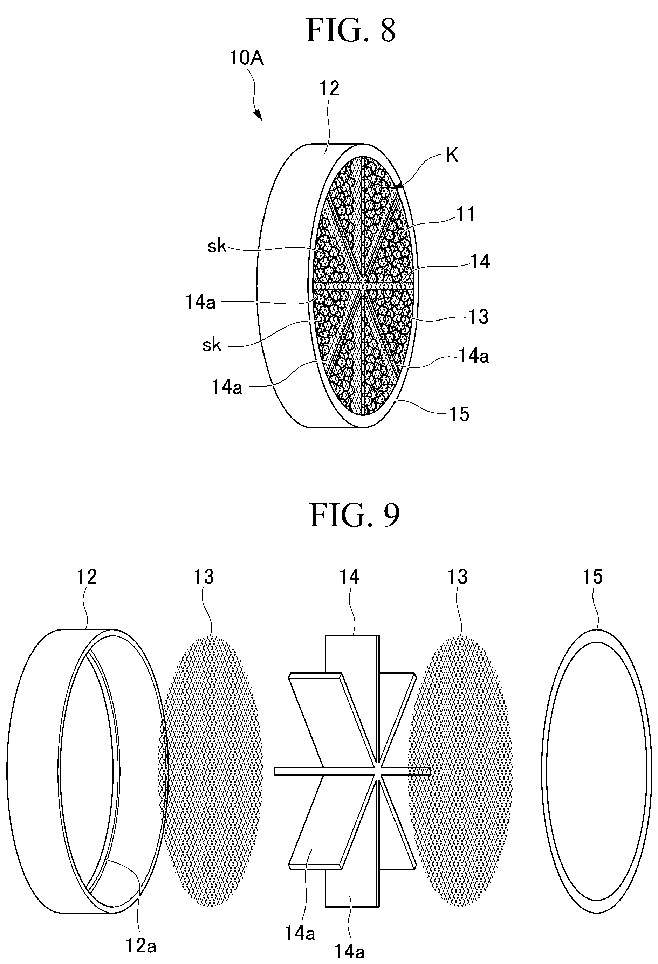

In the present embodiment, the gas recovery device 1 includes an adsorbing member 10A instead of the adsorbing member 10. As shown in FIG. 8 and FIG. 9, the adsorbing member 10A includes the adsorbent 11, the protective member 12, a breathable member 13, a partition plate 14, and a fixing lid 15.

In the present embodiment, a plurality of adsorbents 11 are provided on the inside of the protective member 12. The adsorbent 11 have a spherical (bead) or cylindrical (pellet) shape. A shape of the adsorbent 11 is not particularly limited, and may for example, be a powdered shape.

The protective member 12 has a cylindrical tube shape. The protective member 12 is configured to have openings on both ends of the cylindrical tube. A circular hooking protrusion 12a is formed on the inner circumferential surface of a first end of the protective member 12.

The breathable member 13 is a breathable member having a cylindrical shape, formed so as to include a plurality of openings. The breathable member 13 is breathable. The breathable member 13 for example, is a mesh shape. To prevent the adsorbent 11 from falling out, an opening formed on the breathable member 13 may be smaller than the adsorbent 11.

Two breathable members 13 are placed on the first and second ends of the protective member 12. The breathable members 13 are provided so as to block the openings of the protective member 12. One of the two breathable members 13 is hooked on to the hooking protrusion 12a of the protective member 12. The other one of the two breathable members 13 is fixed to the second end of the protective member 12 using the fixing lid 15. The plurality of adsorbents 11 are accommodated in a compartmentalized accommodation space K using the protective member 12 and the two breathable members 13. Since the breathable members 13 are breathable, air flows through the inside of the protective member 12.

The fixing lid 15 is circular. The fixing lid 15 is fitted to the second end of the protective member 12, having the breathable member 13 be sandwiched therebetween. The breathable member 13 may also be adhered to the second end of the protective member 12 without providing the fixing lid 15. When not providing the fixing lid 15, the breathable member 13 and the protective member 12 may also be formed integrally.

The partition plate 14 is disposed on the inside of the protective member 12. In other words, the partition plate 14 is disposed in the accommodation space K. The partition plate 14 is configured from a plurality of partition fragments 14a that radially extend outwards having a center thereof be the center axis of the protective member 12. The partition plate 14 (plurality of partition fragments 14a) partition the accommodation space K into a plurality of small spaces sk. Each of the plurality of small spaces sk is filled with the plurality of adsorbents 11. Shapes of the partition fragments 14a are not limited thereto, and the plurality of partition fragments 14a may configured so as to have a grid or spiral shape or the like.

The protective member 12 and the partition plate 14 possess thermal resistance and weather resistance. The protective member 12 and the partition plate 14 are formed out of material with thermal conductivity higher than the thermal conductivity of air. For example, the protective member 12 may be a metal such as aluminum, stainless steel, copper or the like, or may be a resin such as polyvinyl chloride or the like. Material for the partition plate 14 includes a metal such as aluminum, stainless steel, copper or the like, or a resin such as polyvinyl chloride or the like. Material for the protective member 12 and the partition plate 14 may be the same, or may differ from one another.

As explained above, the plurality of adsorbents 11 are provided on the inside of the protective member 12 in the present embodiment.

Accordingly, since the shape of the adsorbent 11 is not particularly limited, it is possible to utilize adsorbents having various shapes such as spherical or cylindrical shapes etc. as the adsorbent 11.

The protective member 12 is a cylindrical tube shape having openings on both ends. The adsorbing member 10A further includes the two breathable members 13 provided on each of the first and second ends of the protective member 12. The plurality of adsorbents 11 are accommodated in the accommodation space K compartmentalized by the protective member 12 and the two breathable members 13.

Accordingly, it is possible to insure breathability of the inside of the protective member 12, while providing the plurality of adsorbents 11 on the inside of the protective member 12.

The adsorbing member 10A further includes the partition plate 14 that compartmentalizes the accommodation space K to the plurality of small spaces sk. Each of the plurality of small spaces sk is filled with the plurality of adsorbents 11.

By filling up the plurality of small spaces partitioned by the partition plate 14 with the plurality of adsorbents 11, it is possible to limit movement of the adsorbents 11 on the inside of the protective member 12. Accordingly, it is possible to suppress wear of the adsorbents 11 resulting from contact with one another. A density distribution of the adsorbents 11 on the inside or the protective member 12 is uniform. Accordingly, it is possible to have the adsorbents 11 efficiently come into contact with the combined gas, and it is possible to increase absorption efficiency of the combined gas by the adsorbents 11.

The shape of the adsorbent 11 is spherical or cylindrical.

In such case, compared to a case where the adsorbents are shaped into a honeycomb shape for example, it is possible to reduce production cost of the adsorbents 11.

The protective member 12 and the partition plate 14 include thermal resistance and weather resistance.

Accordingly, it is possible to suppress degradation in the protective member 12 and the partition plate 14, and it is possible to suitably utilize the gas recovery device 1 outdoors. Also, when using heat to separate the target gas from the adsorbents 11, since it is possible to efficiently heat up the adsorbents 11 through the protective member 12 and the partition plate 14, it is possible to facilitate separation of the target gas.

The protective member 12 and the partition plate 14 are formed of materials having thermal conductivity higher than the thermal conductivity of air.

For example, when using heat to separate the target gas, since it is possible to efficiently heat up the adsorbents 11 through the protective member 12 and the partition plate 14, it is possible to efficiently heat up the adsorbents 11, and it is possible to facility separation of the target gas.

### Third Embodiment

Next, the gas recovery device according to a third embodiment is explained. The gas recovery device 1 according to the present embodiment is fundamentally the same as the gas recovery device of the first embodiment, with explanations hereafter only centering on differences therebetween.

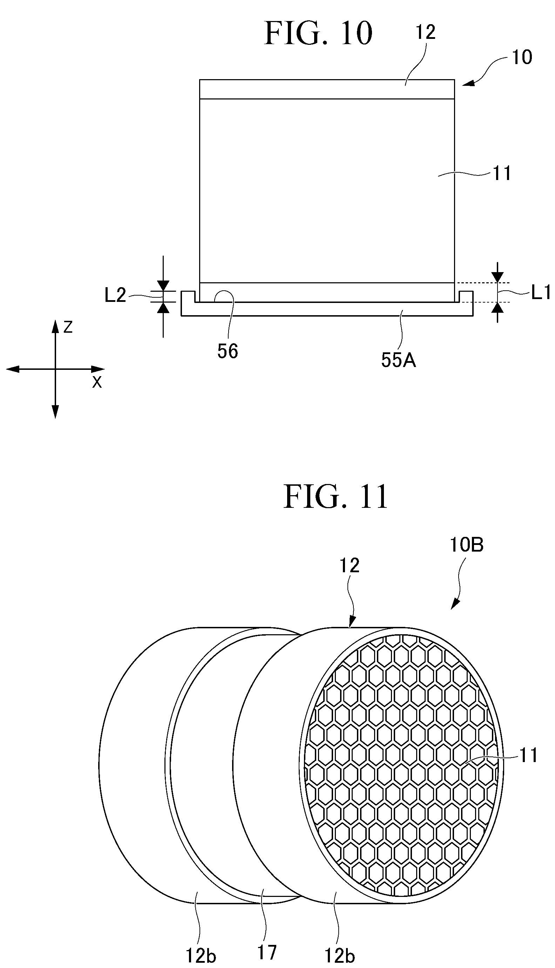

In the present embodiment, an inclined plate 55A is provided instead of the inclined plate 55. FIG. 10 is a cross-sectional view of the inclined plate 55A, taken along the width direction. As shown in FIG. 10, a groove 56 that guides the adsorbing member 10 is formed in the inclined plate 55A. The groove 56 is provided so as to recess below from a top surface of the inclined plate 55A. The groove 56 is provided in the center of the inclined plate 55A in the width direction.

The groove 56 is not formed on both ends of the inclined plate 55A in the width direction. The groove 56 is formed over an entire region in the long hand direction of the inclined plate 55A. A thickness L1 of the protective member 12 is greater than a depth (in other words, a length in the Z direction of the groove 56) L2 of the groove 56, or L1 > L2.

The adsorbing member 10 (protective member 12) is disposed on an inside of the groove 56, and moves along the groove 56. At such a time, an outer circumferential surface of the protective member 12 contacts a top surface of the groove 56. Since L1 > L2, it is possible to prevent the adsorbents 11 from coming into contact with the inclined plate 55A.

As explained above, in the present embodiment, a guide which guides the adsorbing member 10 is provided in the inclined plate 55A.

Accordingly, it is possible to suppress the adsorbing member 10 from falling from the inclined plate 55A, and it is possible to increase reliability of the gas recovery device 1.

The groove 56 is formed as a guide in the inclined plate 55A. With the thickness of the protective member 12 being L1 and the depth of the groove 56 being L2, L1 > L2. The protective member 12 moves along the groove 56.

Since the protective member 12 moves on the inclined plate 55A along the groove 56, it is possible to suppress the adsorbing member 10A from falling from the inclined plate 55A due to the weight of the adsorbing member 10A. Since L1 > L2, when moving the protective member 12, only the protective member 12 comes into contact with the inclined plate 55A, while the adsorbent 11 does not directly come into contact with the inclined plate 55A. Therefore, it is possible to prevent damage and degradation of the adsorbent 11 due to contact with the inclined plate 55A.

### Fourth Embodiment

Next, a gas recovery device 1 according to a fourth embodiment is explained. The gas recovery device 1 according to the present embodiment is fundamentally the same as the gas recovery device of the first embodiment, with explanations hereafter only centering on differences therebetween.

In the present embodiment, an adsorbing member 10B is provided instead of the adsorbing member 10. FIG. 11 is a perspective view of the adsorbing member 10B. As shown in FIG. 11, the protective member 12 in the adsorbing member 10B is configured from two ring members 12b separated from one another in the axial direction. Accordingly, a recess 17 which recesses inwards from the outer circumferential surface of the protective member 12 is formed in the adsorbing member 10B.

The recess 17 is formed over an entirety of the adsorbing member 10B (protective member 12) in the circumferential direction. The adsorbent 11 is exposed inbetween the two ring members 12b. Therefore, in the present embodiment, it is possible to have the adsorbent 11 contact air from inbetween the two ring members 12b.

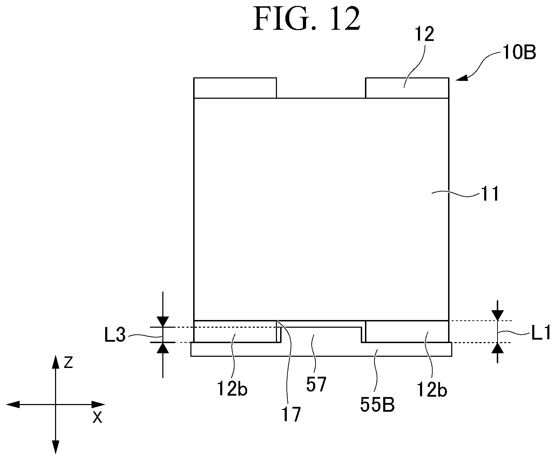

In the present embodiment, an inclined plate 55B is provided instead of the inclined plate 55. FIG. 12 is a cross-sectional view of the inclined plate 55B. As shown in FIG. 12, a protrusion 57, which acts as a guide that guides the adsorbing member 10B, is formed in the inclined plate 55B. The protrusion 57 is provided so as to protrude above from a top surface of the inclined plate 55B. The protrusion 57 is provided on the center in the width direction of the inclined plate 55B. When the thickness of the protective member 12 being L1, and a height (in other words, length in the Z direction of the protrusion 57) of the protrusion 57 is L3, L1 > L3.

The recess 17 of the adsorbing member 10B is engageable with the protrusion 57. In a case where the recess 17 is mated with the protrusion 57, the protective member 12 moves by rolling or sliding on the inclined plate 55B. At such a time, the outer circumferential surface of the protective member 12 (ring member 12b) contacts the top surface of the inclined plate 55B. Since L1 > L3, a gap is formed between the outer circumferential surface of the adsorbent 11 and a top surface of the protrusion 57, and it is possible to prevent having the adsorbent 11 contact the protrusion 57 (the inclined plate 55B).

As explained above, in the present embodiment, the protrusion 57 is formed as a guide in the inclined plate 55B. The recess 17 is formed so as to be engageable with the protrusion 57 at the adsorbing member 10B. When the thickness of the protective member 12 is L1, and the height of the protrusion 57 is L3, L1 > L3.

In a state where the recess 17 is engaged with the protrusion 57, since the protective member 12 moves on the inclined plate 55B, it is possible to suppress the adsorbing member 10B from falling from the inclined plate 55B. Since L1 > L3, when the protective member 12 moves, only the protective member 12 comes into contact with the inclined plate 55B, while the adsorbent 11 does not come into direct contact with the inclined plate 55B. Therefore, it is possible to prevent damage and degradation of the adsorbent 11 due to contact with the inclined plate 55B.

The technical scope of the present invention is not limited to the embodiments above, and various changes and/or additions may be made so long as the changes and/or additions are within the technical scope of the present invention.

For example, in the first embodiment, the adsorbent 11 and the protective member 12 may have spherical shapes. In such case, to insure breathability, a plurality of openings may be formed on the protective member 12. The protective member 12 may also be a mesh shape.

In the second embodiment, the protective member 12 may have a spherical shape. In such case, to insure breathability, a plurality of openings may be formed on the protective member 12. The protective member 12 may be a mesh shape. In such case, it is possible to omit the breathable member 13.

In the second embodiment, the partition plate 14 may be formed from an adsorbent that is shaped as a sheet. In such case, it is possible to increase a recovery amount of carbon dioxide by the adsorbent 11.

The blower 20 may be omitted from the first to the fourth embodiments. In such case, for example, the accommodator 30 may be disposed outdoors, and blowing of outdoor air may cause air to flow to the adsorber 50.

Although carbon dioxide is explained as an example of the target gas in the first to the fourth embodiments, the present invention is not limited thereto. It is possible to apply the gas recovery device of the present invention to cases where the target gas is nitrous oxide (NOx), methane, water, or formaldehyde or the like. A combined gas which includes the target gas is not limited to air.

The above mentioned embodiments and modifications may be suitably combined.

For example, the adsorbing member 10A according to the second embodiment may suitably be combined with the gas recovery device 1 according to the third embodiment or the fourth embodiment. In a case where the adsorbing member 10A according to the second embodiment is applied to the gas recovery device 1 according to the fourth embodiment, the protective member 12 is not split into the two ring members 12b, and the recess 17 may be formed on the protective member 12 so as to recess from the outer circumferential surface of the protective member 12. The protective member 12 may also be formed of the two ring members 12b, and the ring members 12b may be in contact with one another via the cylindrical tube shape breathable member 13.

### Reference Signs List

- 1: Gas Recovery Device
- 10,10A,10B: Adsorbing Member
- 11: Adsorbent
- 12: Protective Member
- 13: Breathable Member
- 14: Partition Plate
- 17: Recess
- 50: Adsorber
- 55,55A,55B: Inclined Plate (Inclines)
- 56: Groove
- 57: Protrusion
- K: Accommodation Space
- sk: Small Space

## Claims

1. A gas recovery device comprising:
a protective member;
an adsorbing member provided on an inside of the protective member, and includes an adsorbent that adsorb a target gas; and
an adsorber, which includes an adsorbing space formed on an inside of the adsorber, and through which a combined gas that includes the target gas flows;
wherein
an incline which inclines towards a horizontal direction is provided in the adsorber, and
in the adsorber, the protective member moves on the incline.

2. The gas recovery device according to claim 1, wherein
the protective member includes a breathable member.

3. The gas recovery device according to claim 1 or 2, wherein
the adsorbent has a cylindrical shape, and the protective member has a cylindrical tube shape, and covers an outer circumferential surface of the adsorbent.

4. The gas recovery device according to claim 1 or 2, wherein
a plurality of the adsorbent are provided on an inside of the protective member.

5. The gas recovery device according to claim 4, wherein
the protective member is a cylindrical tube shape that opens to both ends, and includes a first end and a second end,
the adsorbing member further includes two of the breathable member which are provided on each of the first and second ends of the protective member, and
the plurality of the adsorbent are accommodated in an accommodation space compartmentalized by the protective member and the two breathable members.

6. The gas recovery device according to claim 5, wherein
the adsorbing member includes a partition plate that partitions the accommodation space compartmentalized by the protective member and the two breathable members into a plurality of small spaces, and
each of the plurality of small spaces is filled with the plurality of the adsorbent.

7. The gas recovery device according to any one of claims 4 to 6, wherein
the adsorbent has a spherical or a cylindrical shape.

8. The gas recovery device according to claim 6, wherein
the protective member and the partition plate include thermal resistance and weather resistance.

9. The gas recovery device according to claim 6, wherein
the protective member and the partition plate are formed out of material with thermal conductivity higher than the thermal conductivity of air.

10. The gas recovery device according to claim 6, wherein
the partition plate is formed from an adsorbent that is shaped as a sheet.

11. The gas recovery device according to any one of claims 1 to 10, wherein
the incline is a plate shape.

12. The gas recovery device according to claim 11, wherein
a guide that guides the adsorbing member is provided on the incline.

13. The gas recovery device according to claim 12, wherein
a groove is formed as the guide,
when a thickness of the protective member is L1, and a depth of the groove is L2, L1 > L2, and
the protective member moves along the groove.

14. The gas recovery device according to claim 12, wherein
a protrusion which acts as a guide that guides the adsorbing member is formed in the incline,
a recess that is engageable with the protrusion is formed at the adsorbing member, and
when the thickness of the protective member is L1, and the a height of the protrusion is L3, L1 > L3.

15. The gas recovery device according to any one of claims 1 to 14, wherein
the protective member has a cylindrical tube shape that opens to both ends, and
an axial direction along a center axis of the protective member and a flow direction of the combined gas are roughly parallel at the adsorbing member.

16. The gas recovery device according to any one of claims 1 to 15, wherein
the protective member moves by rolling on the incline.

17. The gas recovery device according to any one of claims 1 to 16, wherein
the target gas is carbon dioxide.
